# EUROPÄISCHE PATENTSCHRIFT

(11) **EP 0 280 202 B1**
(45) Veröffentlichungstag und Bekanntmachung des Hinweises auf die Patenterteilung: **28.04.1993**
(21) Anmeldenummer: 88102404.6
(22) Anmeldetag: 19.02.1988
(51) Int. Cl.: F16D 23/04, F16D 69/02

(54) **Verfahren zum Herstellen eines Synchronringes**
Method of manufacturing a synchro ring
Procédé de fabrication d'un anneau de synchronisation

(30) Priorität: 21.02.1987 DE 3705660
(43) Veröffentlichungstag der Anmeldung: 31.08.1988
(73) Patentinhaber: ZWN ZAHNRADWERK NEUENSTEIN GMBH & CO., D-74632 Neuenstein (DE); Miba Sintermetall Aktiengesellschaft, A-4663 Laakirchen (AT)
(72) Erfinder: Gramberger, Johann, A-4902 Wolfsegg (AT)
(74) Vertreter: Witte, Alexander, Dr.-Ing.

(56) Entgegenhaltungen:
- DE-C- 3 637 386
- GB-A- 761 417
- US-A- 3 306 401
- US-A- 3 370 947

## Beschreibung

Die Erfindung bezieht sich auf ein Verfahren zum Herstellen eines Reibkörpers, bei dem ein aus einem verdichteten interpulver vorgefertigter Reibbelag auf einen Stützkörper aufgesintert wird.

Ein Verfahren der vorstehend genannten Art ist aus dem Dokument GB-A-761,417 bekannt.

Die bei Sinterkörpern auftretenden Werkstoffporen bringen beim Einsatz von solchen Werkstoffen für Reibbeläge Vorteile mit sich, die bei Reibscheiben mit einer ebenen Reibfläche einfach ausgenützt werden können, weil das aus verschiedenen Komponenten bestehende Sinterpulver genau dosiert auf den Scheibenkörper aufgebracht und in einer Reihe von Verfahrensschritten gesintert und verdichtet werden kann, wobei sich beim Sintern eine gute Verbindung zwischen dem Reibbelag und dem Scheibenkörper ergibt.

Reibringe, wie sie bei Synchronisiereinrichtungen von Schaltgetrieben, Reibkupplungen oder Reibbremsen Verwendung finden, werden üblicherweise jedoch nicht mit Reibbelägen aus einem Sinterwerkstoff versehen, weil bereits das Auftragen des Sinterpulvers auf die zylindrische oder konische Reibfläche Schwierigkeiten bereitet und ein Verdichten der aufgebrachten Pulverschicht über eine maximale Druckstempelbewegung nicht möglich ist.

Um trotzdem Reibringe mit einem Streusinter-Reibbelag ausrüsten zu können, ist es aus dem Dokument DE-B-34 17 813 bekannt, den Reibbelag in einer herkömmlichen Weise auf ein ebenes Trägerblech aufzusintern und dann dieses Trägerblech nach einem Biegen entsprechend der geometrischen Form der Reibfläche des Reibringes mit dem Stützring durch ein Punktschweißen zu verbinden. Nachteilig bei diesen bekannten Reibringen ist allerdings, daß durch das Punktschweißen eine ungleichmäßige Wärmebelastung des Stützringes mit der Gefahr von Wärmespannungen auftritt, daß aufgrund der Federwirkung des Federblechs zwischen den Schweißstellen ein genaueres Nacharbeiten des Reibbelages nicht möglich ist, und daß in der Praxis wegen der bei vorgegebenen Stützringabmessungen um die Dicke des Trägerblechs verminderten Stärke des Sinterwerkstoffs keine engen Fertigungstoleranzen eingehalten werden können.

Aus dem Dokument DE-A-21 39 386 ist ferner ein Verfahren zum Herstellen von Reibkörpern bekannt, bei dem zunächst aus einer Reibbelagpulvermischung durch Vorpressen und Vorsintern ohne Druck ein Preßling hergestellt wird. Der auf diese Weise hergestellte Preßling wird dann in einem weiteren Verfahrensschritt unter Anwendung von Druck durch Aufsintern mit einem Reibbelagträger verbunden.

Bei diesem bekannten Verfahren ist die Druckanwendung während des Aufsinterns erforderlich, weil ein ebener Preßling auf einem ebenen Reibbelagträger ohne gleichzeitige Druckeinwirkung nicht zu einem mechanisch belastbaren Verbund gesintert werden könnte.

Aus dem Dokument US-A-3 306 401 ist ein berylliumhaltiges Reibelement bekannt, wie es für Bremsen oder Kupplungen eingesetzt werden soll. Nach einem in diesem Dokument beschriebenen Ausführungsbeispiel wird ein pulverförmiges Reibmaterial zunächst in einem getrennten Arbeitsgang kaltgepreßt, so daß ein sogenannter "Grünling" entsteht. In einem zweiten Arbeitsgang wird der Grünling in einer heizbaren Presse auf ein Blech unter Druck aufgesintert. Das so entstehende Element wird dann in einem weiteren Arbeitsgang ebenfalls unter Druck auf eine Trägerlamelle aufgelötet. Bei diesem bekannten Verfahren werden ausschließlich plane Elemente verwendet, deren Formgebung sich - abgesehen von einer beim Pressen eintretenden Verdichtung - sich im Verlaufe des Verfahrens nicht ändert. Es ist außerdem ein dreistufiges Verfahren erforderlich, um schlußendlich zu einem als Maschinenelement einsetzbaren Reibelement (Kupplungs- oder Bremslamelle) zu gelangen.

Aus dem Dokument US-A-2 395 189 ist ein Synchronring bekannt. Zur Herstellung dieses Synchronrings wird zunächst ein flaches Blech mit einer Reibmaterialschicht ausreichender Dicke verbunden. Von welcher Art das Reibmaterial ist und wie die Verbindung im einzelnen hergestellt wird, ist in dem Dokument nicht im einzelnen angegeben. Nach dem Aufbringen der Reibmaterialschicht werden aus dem Blech kreisbogenförmige Streifen herausgestanzt, deren äußere Kreisbogenlänge dem Umfang am größeren Ende eines herzustellenden konischen Synchronrings entspricht. Die kreisbogenförmigen Streifen werden dann eingerollt und an ihren Enden miteinander verbunden, so daß ein konischer Synchronring entsteht. Dieses bekannte Verfahren ist daher nur bei solchen Reibelementen einsetzbar, bei denen das Trägermaterial bzw. der Stützring so dünn ausgebildet sind, daß ein nachträgliches Umformen möglich ist.

Aus dem eingangs genannten Dokument GB-A-761 417 ist ein Verfahren zur Herstellung beschichteter Gegenstände, insbesondere von Kupplungsscheiben oder Bremsbändern, bekannt. Das Dokument beschreibt einleitend als Alternativen die bekannten Verfahren des Streusinterns sowie des Foliensinterns. Unter Streusintern wird dabei verstanden, daß ein loses Pulver auf den zu beschichtenden Gegenstand aufgestreut und dann angesintert und gepreßt wird. Unter Foliensintern wird hingegen verstanden, daß aus einem als Beschichtung dienenden Metallpulver zunächst ein separater Sinterkörper hergestellt wird, der die Form des zu beschichtenden Gegenstandes aufweist, auf den dieser Sinterkörper dann später durch Pressen und Sintern aufgebracht wird. Im einzelnen beschreibt das Dokument dann ein Foliensinter-Verfahren, wonach aus einer Pulvermischung durch Ausrollen, d.h. Pressen, ein flächiges Zwischengebilde hergestellt wird, das auch gesintert werden kann. Aus diesem Zwischengebilde, nämlich der sogenannten Folie, wird dann durch Aufstanzen ein kreisringförmiger Körper hergestellt, der dann in einem weiteren Verfahrensschritt an eine ebene Stahllamelle angesintert wird. Dieses bekannte Verfahren ist daher ebenfalls nicht geeignet, um auf konische Reibflächen, insbesondere von Synchronringen, durch direktes Ansintern einen Reibbelag aufzubringen.

Aus dem Dokument FR-A-1 570 493 ist schließlich noch ein Verfahren zum Herstellen von metallischen Trägerkörpern mit Sinterbelag, insbesondere von Kupplungs- oder Bremslamellen, bekannt. Auch in diesem Dokument werden einleitend zwei bekannte Verfahren, nämlich das Foliensintern und das Drucksintern beschrieben, wobei unter letztgenanntem ein Verfahren, ähnlich dem bereits erwähnten Streusintern, verstanden wird, jedoch mit der Abweichung, daß das auf die Unterlage aufgestreute Pulver vor dem Ansintern aufgepreßt wird. Im einzelnen beschäftigt sich das Dokument dann mit einem Streusinter-Verfahren, wobei die Besonderheit darin besteht, daß das lose aufgestreute und anschließend angesinterte Pulver nach dem Sintern durch Pressen verdichtet wird. Auf diese Weise werden also ebenfalls ebene Bauelemente, nämlich Kupplungs- oder Bremslamellen, hergestellt, deren ebene Bauform es gestattet, das Reibpulver für den Sinterreibbelag durch Aufstreuen aufzubringen und wobei dann schließlich die lose aufgestreute Pulverschicht anschließend angesintert und dann durch Pressen verdichtet wird. Auch mit diesem bekannten Verfahren ist daher eine Herstellung von Maschinenelementen mit konischer Reibfläche weder vorgesehen noch möglich.

Der Erfindung liegt demgegenüber die Aufgabe zugrunde, ein Herstellungsverfahren für einen Reibring der eingangs genannten Art anzugeben, mit dessen Hilfe der nicht-ebene, sondern vielmehr konische oder vorzugsweise zylindrische Stützring in einfacher Weise mit einem Reibbelag aus einem Sinterwerkstoff versehen werden kann, ohne den Sinterwerkstoff auf einen gesonderten Träger aufzubringen und diesen Träger mit dem Stützring verbinden zu müssen und ohne während-des Aufsinterns des Reibbelages Druck anwenden zu müssen.

Diese Aufgabe wird erfindungsgemäß dadurch gelöst, daß der vorgefertigte Reibbelag ein Formring ist, der auf eine zylindrische oder konische Fläche eines Stützringes eines Synchronringes aufgepreßt und danach aufgesintert wird.

Das erfindungsgemäße Verfahren kann durch die folgenden vier Ausführungsbeispiele weitergebildet werden:

Ein erstes Ausführungsbeispiel umfaßt die Verfahrensschritte:
- Einbringen des Sinterpulvers in eine Form mit hohlkegelstumpfförmigem Hohlraum;
- Verpressen des in die Form eingebrachten Sinterpulvers zu einem Formkörper;
- Vorsintern des Formkörpers zum Erzeugen des selbsttragenden, druckfesten Formringes;
- Einpressen des Formringes auf die konische Ringfläche des Stützringes; und
- Sintern des Stützringes mit eingepreßtem Formring.

Das zweite Ausführungsbeispiel umfaßt die Verfahrensschritte:
- Einbringen des Sinterpulvers in eine Form mit hohlkegelstumpfförmigem Hohlraum;
- Verpressen des in die Form eingebrachten Sinterpulvers zu einem Formkörper;
- Abbinden des Formkörpers mittels eines Bindemittels zum Erzeugen eines selbsttragenden, druckfesten Formringes;
- Einpressen des Formringes auf die konische Ringfläche des Stützringes; und
- Sintern des Stützringes mit eingepreßtem Formring.

Das dritte Ausführungsbeispiel umfaßt die Verfahrensschritte:
- Einbringen des Sinterpulvers in eine Strangpresse mit ringförmigem Hohlraum;
- Strangpressen des in die Strangpresse eingebrachten Sinterpulvers und Abtrennen eines ringförmigen Formkörpers von dem stranggepreßten Sinterpulver;
- Vorsintern des Formkörpers zum Erzeugen des selbsttragenden, druckfesten Formringes; und
- Sintern des Stützringes mit eingepreßtem Formring.

Das vierte Ausführungsbeispiel umfaßt die Verfahrensschritte:
- Einbringen des Sinterpulvers in eine Strangpresse mit ringförmigem Hohlraum;
- Strangpressen des in die Strangpresse eingebrachten Sinterpulvers und Abtrennen eines ringförmigen Formkörpers von dem stranggepreßten Sinterpulver;
- Abbinden des Formkörpers mittels eines Bindemittels zum Erzeugen des selbsttragenden, druckfesten Formringes;
- Einpressen des Formringes auf die konische oder zylindrische Ringfläche des Stützringes; und
- Sintern des Stützringes mit eingepreßtem Formring.

Die der Erfindung zugrundeliegende Aufgabe wird auf diese Weise vollkommen gelöst, weil durch das Einpressen des Formringes in den Stützring bereits zu diesem Zeitpunkt ein so formstabiler Verbund zwischen Stützring und Formring erzielt wird, daß beim nachfolgenden Fertigsintern keine separate Druckeinwirkung mehr erforderlich ist.

Da durch ein Vorsintern oder ein Abbinden mittels eines Bindemittels aus dem vorgegebenen Sinterpulver ein selbsttragender Formring erhalten werden kann, der eine fur die Weiterverarbeitung ausreichende Druckfestigkeit aufweist, kann für die Herstellung des Reibbelages ein gesondertes Trägerblech entfallen, und der aus dem Sinterwerkstoff vorgefertigte Formring unmittelbar in den Stützring eingepreßt und unter inniger Verbindung mit dem Stützring gesintert werden. Es wird daher eine ganzflächige Verbindung zwischen dem Reibbelag und dem Stützring hergestellt, die nicht nur allen auftretenden Belastungen gerecht wird, sondern auch eine sonst sich zwischen den Verbindungsstellen ergebende, federnde Abstützung vermeidet, was sich unmittelbar in einer verbesserten Fertigungstoleranz bei einer Nachbearbeitung der Reibfläche niederschlägt. Außerdem braucht bei der Bemessung des Reibbelages die Dicke des Trägerblechs nicht berücksichtigt zu werden, so daß die Dicke der Sinterpulverschicht bei der Herstellung des selbsttragenden Formringes entsprechend größer gewählt werden kann. Damit können die Dichte des Sinterwerkstoffs und mit der Dichte die angestrebte Porosität erheblich genauer gesteuert werden, weil sich Ungleichmäßigkeiten beim Auftragen des Sinterpulvers bei größeren Schichtstärken weniger nachteilig auswirken können.

In diesem Zusammenhang ist zu berücksichtigen, daß die auf eine Unterlage aufgebrachte Sinterpulverschicht ja auf die gewünschte Schichtstärke verdichtet werden muß. Schließlich wird auch das Einarbeiten von Verdrängungsnuten für ein Schmiermittel bei einer größeren Dicke des Reibbelages einfacher.

All dies ist prinzipiell unabhängig davon, ob das Sinterpulver gemäß den beiden zuerst genannten Varianten des erfindungsgemäßen Verfahrens in einer Form verpreßt oder gemäß den beiden weiter genannten Varianten des erfindungsgemäßen Verfahrens in einer Strangpresse verpreßt werden. Für eine Massenfertigung eignet sich insbesondere das Verfahren, bei dem das für den Reibbelag vorgesehene Sinterpulver durch ein Strangpressen zu einem Rohr verpreßt wird, von dem nach dem Vorsintern die einzelnen Formringe abgetrennt werden, weil bei einem solchen Herstellungsverfahren eine weitgehend kontinuierliche Fertigung der Formringe möglich ist.

Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Form zur Herstellung eines Formringes für den Reibbelag, ausschnittsweise, in einem schematischen Axialschnitt;
- Fig. 2: einen schematischen Schnitt durch eine Strangpresse für das Sinterpulver zum Herstellen eines Formringes;
- Fig. 3: einen radialen Querschnitt durch einen Ausschnitt aus einem Synchronring, wie er nach dem erfindungsgemäßen Verfahren hergestellt werden kann.

Um bei einem Synchronring einen Stützring mit einem Reibbelag aus einem Sinterwerkstoff versehen zu können, wird zunächst aus dem Sinterwerkstoff ein selbsttragender Formring hergestellt, der eine ausreichende Druckfestigkeit für das Einpressen dieses Formringes in einen Stützring aufweist. Zu diesem Zweck wird das für den Reibbelag vorgesehene Sinterpulvergemisch 1 in eine Form 2 eingebracht und zu einem entsprechenden Formkörper verpreßt. Durch ein Vorsintern oder ein Abbinden des Sinterpulvers mittels eines Bindemittels wird die erforderliche Eigenfestigkeit für den Formring hergestellt, der nach dem Entformen in den Stützring eingepreßt und gesintert wird, wobei sich eine ganzflächige, innige Verbindung zwischen dem den Reibbelag bildenden Formring und dem Stützring ergibt. Wird der Stützring ebenfalls aus einem Sinterwerkstoff hergestellt, so kann die Sinterung des Reibbelages und des Stützringes gemeinsam erfolgen.

Eine andere Möglichkeit zur Herstellung selbsttragender Formringe besteht darin, das vorbereitete Sinterpulver 1 in einer Strangpresse 3 zu verpressen, die aus einem äußeren Formrohr 4 und einem mit allseitigem Abstand in das Formrohr 4 eingesetzten Dorn 5 besteht. Mit Hilfe eines nicht dargestellten Preßstempels wird das Sinterpulver 1 in den Ringraum zwischen dem Formrohr 4 und dem Dorn 5 gepreßt, so daß aus der Strangpresse 3 ein Rohrstrang 6 austritt, von dem die einzelnen Formringe 7 abgetrennt werden können. Die erforderliche Belastbarkeit des Rohrstranges 6 kann wiederum durch ein Vorsintern des rohrförmig verpreßten Sinterpulvers oder ein Abbinden des Rohrkörpers mittels eines dem Sinterpulver beigemischten Bindemittels sichergestellt werden.

Die Wärmebehandlung zum Vorsintern des Rohres 6 kann dabei während der Förderung des Rohrstranges durch das Formrohr 4 der Strangpresse 3 durchgeführt werden. Während der Förderzeit des Rohrstranges durch das Formrohr 4 der Strangpresse 3 kann auch ein allenfalls beigemischtes Bindemittel in einem ausreichenden Maß abbinden.

Sollten nicht zylindrische, sondern konische Formringe hergestellt werden, so können die zylindrisch hergestellten Formringe nachträglich konisch aufgeweitet werden. Sind das Formrohr 4 und der Dorn 5 der Strangpresse 3 im Austrittsbereich des Rohrstranges 6 konisch erweitert, so gelingt es, konische Ringe auch unmittelbar durch ein Strangpressen herzustellen, wenn die einzelnen Formringe unmittelbar nach dem Austritt des Rohrstranges 6 aus der Strangpresse 3 vom Rohrstrang 6 abgetrennt werden.

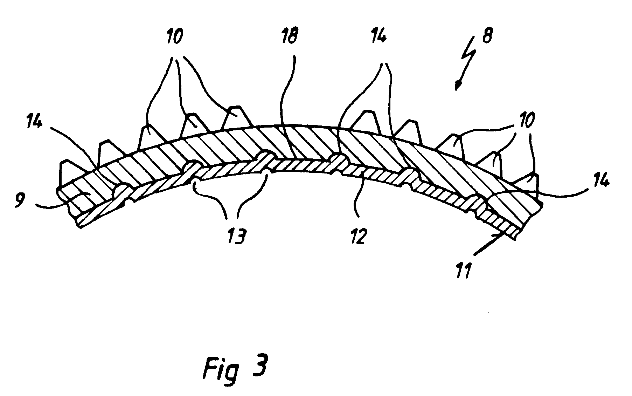

Fig. 3 zeigt einen schematischen Querschnitt durch einen Teil eines Synchronringes, wie er nach dem erfindinngsgemäßen Verfahren hergestellt wurde.

Der Synchronring 8 besteht im wesentlichen aus einem Stützring 9 aus Metall oder einem Sintermaterial. Der Stützring 9 ist an einer äußeren umlaufenden Oberfläche mit Zähnen versehen, während eine innere umlaufende Oberfläche 11 eine Reibfläche darstellt. Vorzugsweise ist die Reibfläche 11 von konischer Gestalt, kann aber auch von zylindrischer Gestalt sein. Es versteht sich ferner von selbst, daß der Synchronring 8 auch an einer inneren umlaufenden Oberfläche mit Zähnen und an einer äußeren umlaufenden Oberfläche mit einer Reibfläche versehen sein kann, oder es können sowohl eine innere wie auch eine äußere umlaufende Oberfläche jeweils mit axial beabstandeten Reibflächen und Zähnen versehen sein, ohne daß dies den Rahmen der vorliegenden Erfindung sprengt.

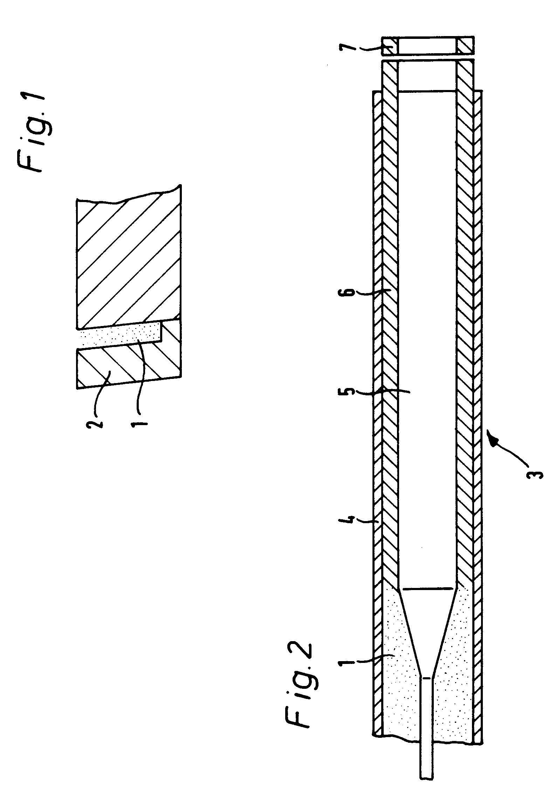

Beim erfindinngsgemäßen Ausführungsbeispiel gemäß Fig. 3 ist der Stützring 9 mit einem ringförmigen Reibkörper 12 versehen, der nach einem der Verfahren hergestellt wurde, wie es weiter oben zu den Fig. 1 und 2 erläutert wurde. Der Reibkörper 12 kann mit Vertiefungen 13 an einer inneren umlaufenden Oberfläche versehen sein sowie mit weiteren Vertiefungen 14 an einer äußeren umlaufenden Oberfläche oder einer Verbindungsoberfläche 18, die in entsprechende Vertiefungen im Stützring 9 paßt, um die mechanische Stabilität in einer Umfangsrichtung noch weiter zu erhöhen. Die Vertiefungen 13 können zur Aufnahme von Schmiermitteln dienen.

## Patentansprüche

1. Verfahren zum Herstellen eines ringförmigen Reibkörpers, bei dem ein aus einem verdichteten Sinterpulver (1) vorgefertigter Reibbelag auf einen Stützkörper aufgesintert wird, dadurch gekennzeichnet, daß der vorgefertigte Reibbelag ein Formring (5) ist, der auf eine zylindrische oder konische Fläche eines Stützringes eines Synchronringes aufgepreßt und danach aufgesintert wird.

2. Verfahren nach Anspruch 1, mit den Verfahrensschritten:
- Einbringen des Sinterpulvers (1) in eine Form (2) mit hohlkegelstumpfförmigem Hohlraum;
- Verpressen des in die Form (2) eingebrachten Sinterpulvers (1) zu einem Formkörper;
- Vorsintern des Formkörpers zum Erzeugen des selbsttragenden, druckfesten Formringes (5);
- Einpressen des Formringes (5) auf die konische Ringfläche des Stützringes; und
- Sintern des Stützringes mit eingepreßtem Formring (5).

3. Verfahren nach Anspruch 1, mit den Verfahrensschritten:
- Einbringen des Sinterpulvers (1) in eine Form (2) mit hohlkegelstumpfförmigem Hohlraum;
- Verpressen des in die Form (2) eingebrachten Sinterpulvers (1) zu einem Formkörper;
- Abbinden des Formkörpers mittels eines Bindemittels zum Erzeugen eines selbsttragenden, druckfesten Formringes (5);
- Einpressen des Formringes auf die konische Ringfläche des Stützringes; und
- Sintern des Stützringes mit eingepreßtem Formring (5).

4. Verfahren nach Anspruch 1, mit dem Verfahrensschritten:
- Einbringen des Sinterpulvers (1) in eine Strangpresse (3) mit ringförmigem Hohlraum;
- Strangpressen des in die Strangpresse (3) eingebrachten Sinterpulvers (1) und Abtrennen eines ringförmigen Formkörpers von dem stranggepreßten Sinterpulver (1);
- Vorsintern des Formkörpers zum Erzeugen des selbsttragenden, druckfesten Formringes (5);
- Einpressen des Formringes (5) auf die konische oder zylindrische Ringfläche des Stützringes; und
- Sintern des Stützringes mit eingepreßtem Formring.

5. Verfahren nach Anspruch 1, mit den Verfahrensschritten:
- Einbringen des Sinterpulvers (1) in eine Strangpresse (3) mit ringförmigem Hohlraum;
- Strangpressen des in die Strangpresse (3) eingebrachten Sinterpulvers (1) und Abtrennen eines ringförmigen Formkörpers von dem stranggepreßten Sinterpulver (1);
- Abbinden des Formkörpers mittels eines Bindemittels zum Erzeugen des selbsttragenden, druckfesten Formringes (5);
- Einpressen des Formringes (5) auf die konische oder zylindrische Ringfläche des Stützringes; und
- Sintern des Stützringes mit eingepreßtem Formring.

## Claims

1. A process for manufacturing a ring-shaped frictional body, wherein a frictional layer having been prefabricated from a compressed sinter powder (1) is sintered on a supporting body, characterized in that the prefabricated frictional layer is a shaped ring (5) being pressed on a cylindrical or a conical surface of a supporting ring and then sintered thereon.

2. The process of claim 1, comprising the process steps:
- Filling the sinter powder (1) into a form (2) with a frusto-conically shaped hollow cavity;
- pressing the sinter powder (1) having been filled into the form (2) to produce a shaped body;
- presintering the shaped body to produce a self-supporting, pressure-resistant shaped ring (5);
- pressing the shaped ring on the conical annular surface into the supporting ring; and
- sintering the supporting ring with the shaped ring (5) pressed therein.

3. The process of claim 1, comprising the process steps:
- Filling the sinter powder (1) into a form (2) with a frusto-conically shaped hollow cavity;
- pressing the sinter powder (1) having been filled into the form (2) to produce a shaped body;
- hardening the shaped body by means of a binding agent to produce a self-supporting, pressure-resistant shaped ring (5);
- pressing the shaped ring on the conical annular surface into the supporting ring; and
- sintering the supporting ring with the shaped ring (5) pressed therein.

4. The process of claim 1, comprising the process steps:
- Filling the sinter powder (1) into an extruder (3) having a ring-shaped hollow cavity;
- extruding the sinter powder (1) having been filled into the extruder (3) and cutting a ring-shaped body from the extruded sinter powder (1);
- presintering the shaped body to produce a self-supporting, pressure-resistant shaped ring (5);
- pressing the shaped ring (5) on the conical or cylindrical surface into the supporting ring; and
- sintering the supporting ring together with the shaped ring pressed therein.

5. The process of claim 1, comprising the process steps:
- Filling the sinter powder (l) into an extruder (3) having a ring-shaped hollow cavity;
- extruding the sinter powder (1) having been filled into the extruder (3) and cutting a ring-shaped body from the extruded sinter powder (1);
- hardening the shaped body by means of a binding agent to produce a self-supporting, pressure-resistant shaped ring (5);
- pressing the shaped ring (5) on the conical or cylindrical surface into the supporting ring; and
- sintering the supporting ring together with the shaped ring pressed therein.

## Revendications

1. Procédé de fabrication d'un corps de friction annulaire, dans lequel une garniture de friction préfabriquée en une poudre frittée densifiée (1) est agglomérée par frittage sur un corps de support, caractérisé en ce que la garniture de friction préfabriquée est un anneau moulé (5) qui est emmanché puis aggloméré par frittage sur une surface cylindrique ou conique d'un anneau support d'un anneau de synchronisation.

2. Procédé selon la revendication 1, caractérisé en ce qu'il comprend les étapes suivantes :
- introduction de la poudre frittée (1) dans un moule (2) dont la cavité affecte la forme d'un cône tronqué creux ;
- compression de la poudre frittée (1) introduite dans le moule (2) afin d'obtenir un corps moulé ;
- préfrittage du corps moulé pour produire l'anneau moulé (5) auto-porteur et résistant à la pression ;
- enfoncement de l'anneau moulé (5) sur la surface annulaire conique de l'anneau support ; et
- frittage de l'anneau support avec l'anneau moulé emmanché (5).

3. Procédé selon la revendication 1, caractérisé en ce qu'il comprend les étapes suivantes :
- introduction de la poudre frittée (1) dans un moule (2) dont la cavité affecte la forme d'un cône tronqué creux ;
- compression de la poudre frittée (1) introduite dans le moule (2) afin d'obtenir un corps moulé ;
- durcissement du corps moulé au moyen d'un liant pour produire un anneau moulé (5) auto-porteur et résistant à la pression ;
- enfoncement de l'anneau moulé sur la surface annulaire conique de l'anneau support ; et
- frittage de l'anneau support avec l'anneau moulé emmanché (5).

4. Procédé selon la revendication 1, caractérisé en ce qu'il comprend les étapes suivantes :
- introduction de la poudre frittée (1) dans une extrudeuse (3) de cavité annulaire ;
- extrusion de la poudre frittée (1) introduite dans l'extrudeuse (3) et séparation d' un corps moulé annulaire de la poudre frittée extrudée (1) ;
- préfrittage du corps moulé pour produire l'anneau moulé (5) auto-porteur et résistant à la pression ;
- enfoncement de l'anneau moulé (5) sur la surface annulaire conique ou cylindrique de l'anneau support ; et
- frittage de l'anneau support avec l'anneau moulé emmanché (5).

5. Procédé selon la revendication 1, caractérisé en ce qu'il comprend les étapes suivantes :
- introduction de la poudre frittée (1) dans une extrudeuse (3) de cavité annulaire ;
- extrusion de la poudre frittée (1) introduite dans l'extrudeuse (3) et séparation d'un corps moulé annulaire de la poudre frittée extrudée (1) ;
- durcissement du corps moulé au moyen d'un liant pour produire l'anneau moulé (5) autoporteur et résistant à la pression ;
- enfoncement de l'anneau moulé (5) sur la surface annulaire conique ou cylindrique de l'anneau support ; et
- frittage de l'anneau support avec l'anneau moulé emmanché.
